# EUROPEAN PATENT APPLICATION

(11) **EP 4 834 829 A1**
(43) Date of publication of application: **04.11.2026**
(21) Application number: 24912049.4
(22) Date of filing: 11.11.2024
(51) Int. Cl.: C01B 21/064, C01B 21/068

(54) **AMMONIA-GENERATING AGENT AND METHOD FOR PRODUCING AMMONIA-GENERATING AGENT**

(30) Priority: 28.12.2023 JP 2023223394
(71) Applicant: Denka Company Limited, Tokyo 103-8338 (JP)
(72) Inventor: MIYATA, Kenji, Tokyo 103-8338 (JP); ITO, Kazuhiro, Tokyo 103-8338 (JP)
(74) Representative: Hoffmann Eitle
(86) International application number: PCT/JP2024/039957
(87) International publication number: WO 2025/142156

(57) **Abstract**

[Problem] To provide an ammonia-generating agent with which it is possible to stably generate ammonia and a method for producing an ammonia-generating agent.

[Solution] Provided according to one embodiment of the present invention is an ammonia-generating agent that generates ammonia by contact with water molecules. The ammonia-generating agent contains boron nitride having a crystallinity of 90% or less.

## Description

### BACKGROUND

The present invention relates to an ammonia-generating agent and a method for producing the same.

### RELATED ART

Silicon nitride (Si₃N₄) is used for components of various structural bodies because it is a material excellent in strength, hardness, toughness, heat resistance, corrosion resistance, thermal shock resistance, and the like.

In addition to these properties, silicon nitride is known to possess antibacterial properties and biocompatibility (Patent Documents 1 and 2). According to the present inventors' investigations, the antibacterial properties of silicon nitride are due to the action of ammonia (NH₃) generated when silicon nitride comes into contact with water.

When silicon nitride comes into contact with water, ammonia is generated in the liquid phase from the initial stage; simultaneously, silicon oxide (SiO₂) is deposited on the surface of the silicon nitride. This silicon oxide reacts with water to form silicic acid (Si(OH)₄), which dissolves into the liquid phase. As a result, the surface of the silicon nitride is exposed, and ammonia is generated again. However, since the rate of formation of silicic acid from silicon oxide is extremely slow, the surface of the silicon nitride becomes less likely to be exposed over time. As a result, the amount of ammonia generated also decreases over time, and antibacterial properties are reduced.

To solve such problems, there has been a demand for development of a compound capable of stably generating ammonia over a longer period of time.

Such a compound is expected to be used not only as an antimicrobial agent, such as an antibacterial agent, but also in various fields that utilize ammonia.

### PRIOR ART DOCUMENTS

### Patent document

[Patent Document 1] Japanese Unexamined Patent Application Publication (Translation of PCT Application) No. 2015-516239
[Patent Document 2] Japanese Unexamined Patent Application Publication (Translation of PCT Application) No. 2020-512072

### SUMMARY

### Problems to be Solved by Invention

In view of the above circumstances, the present invention provides an ammonia-generating agent capable of stably generating ammonia, and a method for producing the same.

### Means for Solving Problems

According to one aspect of the present invention, there is provided an ammonia-generating agent that generates ammonia upon contact with water molecules. This ammonia-generating agent contains boron nitride having a degree of crystallinity of 90% or less.

According to such an aspect, ammonia can be generated stably.

### BRIEF DESCRIPTION OF DRAWINGS

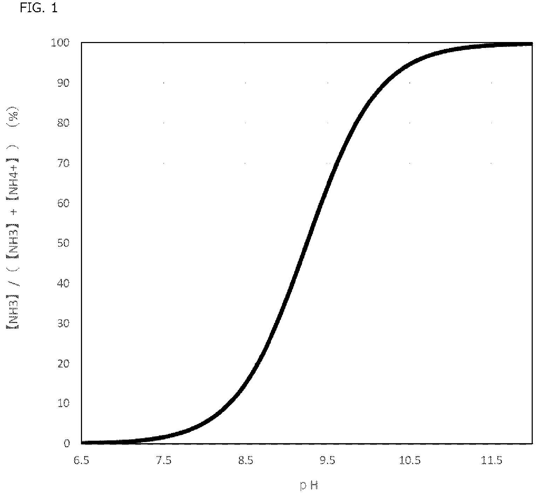

[FIG. 1] FIG. 1 is a graph illustrating the relationship between the proportion of ammonia in the liquid phase and pH.

### DETAILED DESCRIPTION

Hereinafter, embodiments of the present invention will be described. Various features described in the embodiments below can be combined with each other.

An ammonia-generating agent of the present invention generates ammonia upon contact with water molecules. Here, the water molecules may be liquid water or gaseous water vapor. Furthermore, the water or water vapor may contain other substances, as long as such substances do not adversely affect the generation of ammonia.

Ammonia has the effect of inhibiting the growth of various microorganisms or killing them. In the following description, the case where the ammonia-generating agent is used as an antimicrobial agent will be described as an example.

Examples of target microorganisms include Gram-negative bacteria such as Escherichia coli, Vibrio cholerae, Salmonella spp., Shigella spp., Vibrio parahaemolyticus, Pseudomonas aeruginosa, and Salmonella Typhi; Gram-positive bacteria such as Staphylococcus aureus, Staphylococcus epidermidis, Mycobacterium tuberculosis, Streptococcus spp., Enterococcus spp., Clostridium botulinum, Clostridium tetani, and Bacillus cereus; viruses such as influenza virus, feline calicivirus, and COVID-19 virus; and oomycetes, amoebae, and the like.

This ammonia-generating agent contains boron nitride having low crystallinity.

Generally, boron nitride is known to be insoluble in cold water and water at room temperature, and to be slightly soluble in boiling water. As a result of intensive studies on boron nitride, the present inventors have found that boron nitride having low crystallinity is soluble in water at room temperature. Based on this unexpected phenomenon, the present inventors have completed the present invention.

Here, the degree of crystallinity of boron nitride can be expressed in terms of the degree of crystallinity or the graphitization index (G.I.).

The degree of crystallinity of boron nitride is preferably about 90% or less, more preferably about 88% or less, and still more preferably about 86% or less. The degree of crystallinity of boron nitride is preferably about 50% or more, more preferably about 60% or more, and still more preferably about 70% or more.

The degree of crystallinity of boron nitride can be adjusted within the above range, and may be, for example, about 50% to about 90% (inclusive). This makes it possible to sufficiently enhance the solubility of boron nitride in water molecules. It should be noted that boron nitride having a degree of crystallinity below the above lower limit is difficult to produce.

In the present specification, the degree of crystallinity is a value measured by wide-angle X-ray scattering (WAXS).

Specifically, a WAXS measurement is performed on boron nitride powder, and a one-dimensional profile (diffraction data) is generated from the measurement results using data analysis software. Based on the analysis data, the degree of crystallinity (%) can be calculated using the following equation: 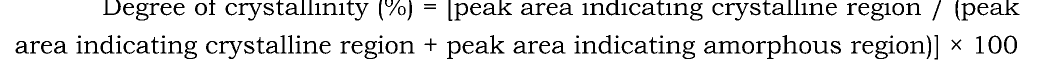 Degree of crystallinity (%) = [peak area indicating crystalline region / (peak area indicating crystalline region + peak area indicating amorphous region)] × 100

Additionally, the graphitization index of boron nitride is generally about 1.5 or higher, preferably about 2 or higher, more preferably about 2.5 or higher, still more preferably about 3 or higher, and particularly preferably about 3.5 or higher. The graphitization index of boron nitride is preferably about 7 or lower, more preferably about 6.5 or lower, and still more preferably about 6 or lower.

The graphitization index of boron nitride can be adjusted within the above range, and may be, for example, about 1.5 to about 7 (inclusive). This makes it possible to sufficiently enhance the solubility of boron nitride in water molecules. It should be noted that boron nitride having a graphitization index exceeding the above upper limit is difficult to produce.

In the present specification, the graphitization index is an index also known as an index value indicating the degree of crystallinity of graphite (see, for example, J. Thomas et al., J. Am. Chem. Soc., 84, 4619 (1962)). The graphitization index can be calculated based on a spectrum obtained by measuring primary particles of boron nitride by powder X-ray diffraction (PXRD).

First, in the X-ray diffraction spectrum, the integrated intensities of diffraction peaks corresponding to the (100), (101), and (102) planes of the primary particles of boron nitride (i.e., area values enclosed by each diffraction peak and its baseline) (in arbitrary units) are calculated and defined as S100, S101, and S102, respectively. Using the calculated area values, the value of [(S100+S101)/S102] is calculated to determine the graphitization index.

Furthermore, boron nitride tends to exhibit reduced crystallinity as its oxygen content increases. Specifically, the oxygen content in boron nitride is preferably about 0.5 atomic% or more, more preferably about 0.7 atomic% or more, and still more preferably about 0.9 atomic% or more. The oxygen content in boron nitride is preferably about 1.5 atomic% or less, more preferably about 1.3 atomic% or less, and still more preferably about 1.1 atomic% or less.

The oxygen content of boron nitride can be adjusted within the above range, and may be, for example, about 0.5 atomic% to about 1.5 atomic% (inclusive). This makes it possible to further reduce the degree of crystallinity and/or graphitization index of boron nitride, thereby further enhancing the solubility of boron nitride in water.

The content of boron nitride in the ammonia-generating agent is preferably about 80 mass% or more, more preferably about 85 mass% or more, still more preferably about 90 mass% or more, particularly preferably about 95 mass% or more, and may be 100 mass%. This makes it possible to sufficiently enhance the amount and rate of generation of ammonia upon contact with water molecules.

Note that components other than boron nitride (low-crystallinity boron nitride) contained in the ammonia-generating agent include, for example, high-crystallinity boron nitride, silicon nitride, aluminum nitride, and the like. By using these components in combination, the amount and rate of ammonia generation of the ammonia-generating agent upon contact with water molecules can be adjusted.

The case in which both boron nitride and silicon nitride are used as the ammonia-generating agent will be described in detail later.

The shape of the ammonia-generating agent is not particularly limited, and examples thereof include particulate, granular, pellet, block, sheet, and fibrous forms. Among these, it is preferable for the ammonia-generating agent to be particulate. Because a particulate ammonia-generating agent has an increased specific surface area, it can sufficiently secure a contact area with water molecules. As a result, the amount and rate of ammonia generation can be further enhanced.

In this case, the volume-average particle size of the ammonia-generating agent (primary particles) is preferably about 10 µm or less, more preferably about 7.5 µm or less, and still more preferably about 5 µm or less. The volume-average particle size of the ammonia-generating agent is preferably about 0.5 µm or more, more preferably about 1 µm or more, and still more preferably about 1.5 µm or more.

The volume-average particle size of the ammonia-generating agent can be adjusted within the above range, and may be, for example, about 0.5 µm to about 10 µm (inclusive). This makes it possible to prevent agglomeration of the ammonia-generating agent while further increasing its specific surface area.

Here, the volume-average particle size refers to a particle size (D₅₀) corresponding to a cumulative passing fraction of 50% from the smaller particle size side in a volume-based particle size distribution obtained by measurement based on the method described in JIS Z 8825:2013 "Particle size analysis-Laser diffraction methods".

The BET specific surface area of the ammonia-generating agent is preferably about 10 m²/g or more, more preferably about 15 m²/g or more, and still more preferably about 20 m²/g or more. The BET specific surface area of the ammonia-generating agent is preferably about 50 m²/g or less, more preferably about 40 m²/g or less, and still more preferably about 30 m²/g or less.

The BET specific surface area of the ammonia-generating agent can be adjusted within the above range, and may be, for example, about 10 m²/g to about 50 m²/g (inclusive). This makes it possible to more reliably enhance the contact area between the ammonia-generating agent and water molecules.

Here, the BET specific surface area refers to a value measured by a BET single-point method using nitrogen gas, based on JIS Z 8830:2013 "Determination of the specific surface area of powders (solids) by gas adsorption-BET method".

When boron nitride is used as the ammonia-generating agent, upon contact with water (immersion in water), the following reactions occur at and around the surface of the ammonia-generating agent:
(A) 2BN + 6H₂O → 2B(OH)₃ + 2NH₃
(B) NH₃ + H₂O ↔ NH₄⁺ + OH⁻
(C) B(OH)₃ + OH⁻ ↔ B(OH)₄⁻

When the ammonia-generating agent comes into contact with water, ammonia (NH₃) is generated according to reaction equation (A), followed by generation of ammonium ions (NH₄⁺) according to reaction equation (B). This increases the pH of the liquid phase around the ammonia-generating agent.

Additionally, boric acid (B(OH)₃ or H₃BO₃) formed by the reaction of reaction equation (A) deposits on the surface of boron nitride. The deposited boric acid forms tetrahydroxyborate anions (B(OH)₄⁻) in accordance with reaction equation (C) and dissolves in water.

In a high pH environment, the reaction of reaction equation (C) occurs rapidly, whereby boric acid is removed from the surface of the boron nitride, allowing the surface of the boron nitride to be smoothly exposed to the liquid phase. Therefore, the reaction of reaction equation (A) occurs again.

In this manner, by the repeated occurrence of the reaction of reaction equation (A) and the reactions of reaction equations (B) and (C), ammonia and ammonium ions are generated rapidly and over a long period of time.

In reaction equation (A) mentioned above, the conversion between ammonia and ammonium occurs depending on the pH of the liquid phase.

FIG. 1 is a graph illustrating the relationship between the proportion of ammonia in the liquid phase and pH.

As illustrated in FIG. 1, the proportion of ammonia in the liquid phase increases significantly, with pH = approximately 9.2 as the inflection point.

When 0.5 g of the ammonia-generating agent is immersed in 10 g of water for 30 hours, the concentration of ammonia in the liquid phase is preferably about 0.15 mmol/dm³ or more, more preferably about 0.18 mmol/dm³ or more, and still more preferably about 0.21 mmol/dm³ or more. This allows the ammonia-generating agent to exhibit a high antimicrobial effect.

It should be noted that the concentration of ammonia in the liquid phase is preferably about 0.3 mmol/dm³ or less. This makes it possible to ensure high safety for a living body when the ammonia-generating agent is implanted in the living body or used for processing a component to be returned or administered to the living body.

It is preferable that the concentration of ammonia in the liquid phase be sufficiently high from the initial stage when the ammonia-generating agent is immersed in water. Specifically, when 0.5 g of the ammonia-generating agent is immersed in 10 g of water for 7 hours, the concentration of ammonia in the liquid phase is preferably about 0.1 mmol/dm³ or more, more preferably about 0.15 mmol/dm³ or more, and still more preferably about 0.2 mmol/dm³ or more. This allows the ammonia-generating agent to exhibit a favorable antimicrobial effect from the initial stage of use.

When 0.5 g of the ammonia-generating agent is immersed in 10 g of water for 800 minutes, it is preferable that the pH of the liquid phase be about 8 or higher, more preferably about 8.3 or higher, and still more preferably about 8.6 or higher. In this case, since the ammonia-generating agent generates ammonia over a long period of time, the antimicrobial effect can be maintained at a high level.

It should be noted that the upper limit of the pH of the liquid phase is preferably slightly lower than the pH at the inflection point where the proportion of ammonia in the liquid phase significantly fluctuates when boron nitride is immersed in water. In this case, it is possible to prevent the concentration of ammonia in the liquid phase from becoming excessively high. Accordingly, when the ammonia-generating agent is implanted in a living body or used for processing a component to be returned or administered to a living body, high safety for the living body can be more reliably ensured.

It is preferable that the pH of the liquid phase not fluctuate significantly from the initial stage when immersion of the ammonia-generating agent in water begins.

Specifically, when 0.5 g of the ammonia-generating agent is immersed in 10 g of water for 200 minutes, the pH of the liquid phase is preferably about 8 or higher, more preferably about 8.3 or higher, and still more preferably about 8.6 or higher. This allows the ammonia-generating agent to maintain a high concentration of ammonia in the liquid phase from the initial stage of use and to exhibit a favorable antimicrobial effect.

When 0.5 g of the ammonia-generating agent is immersed in 10 g of water for 300 minutes, the boron concentration in the liquid phase (pH 9) is preferably about 0.01 mol/dm³ or more, more preferably about 0.03 mol/dm³ or more, and still more preferably about 0.05 mol/dm³ or more. Note that the concentration of boron in the liquid phase is preferably about 0.1 mol/dm³ or less.

When the concentration of boron in the liquid phase is within the above range, it can be considered that the surface of the boron nitride is sufficiently exposed to the liquid phase. Accordingly, the ammonia-generating agent can generate ammonia over a long period of time and maintain a high antimicrobial effect.

The pH of the liquid phase mentioned above may be adjusted, for example, using a pH adjusting agent such as an aqueous hydrogen chloride solution (hydrochloric acid) or nitric acid.

Such an ammonia-generating agent (i.e., particles of boron nitride having low crystallinity) can be produced, for example, as follows.

An embodiment of a method for producing the ammonia-generating agent includes a first step of preparing a mixture, a second step of obtaining amorphous boron nitride, a third step of adjusting the crystallinity of the boron nitride, and a fourth step of performing a post-treatment on the boron nitride after the crystallinity has been adjusted.

First, in the first step, a mixture is prepared that contains a boron-containing compound and a nitrogen-containing compound (hereinafter, the "boron-containing compound" and the "nitrogen-containing compound" may be collectively referred to as "starting materials"), and a sintering aid for promoting conversion of the starting materials into boron nitride during firing, such as an alkali metal compound and/or an alkaline earth metal compound.

Next, in the second step, the mixture is fired at a first firing temperature under an inert atmosphere, such as nitrogen, helium, or argon, and/or under an ammonia atmosphere to obtain amorphous boron nitride.

Thereafter, in the third step, the obtained amorphous boron nitride is further fired at a second firing temperature under an inert atmosphere, such as nitrogen, helium, or argon, and/or under an ammonia atmosphere to adjust the crystallinity of the boron nitride.

Finally, in the fourth step, the obtained boron nitride is washed with a washing liquid to remove impurities, and then dried.

The mixture may contain other components besides the starting materials and the sintering aid as necessary within a scope that does not depart from the gist of the present invention. Examples of such other components include simple substances and compounds. Specific examples of the simple substances and compounds include reducing substances such as carbon.

Examples of the boron-containing compound include boric acid, boron oxide, and borax, with boric acid being preferred. Examples of the nitrogen-containing compound include cyanamide, melamine, and urea, with melamine being preferred. As for each of the boron-containing compound and the nitrogen-containing compound, one of the above compounds may be used alone, or two or more thereof may be used in combination.

The molar ratio of boron atoms to nitrogen atoms contained in the starting materials need not necessarily be fixed at 5:5. The molar ratio of boron atoms to nitrogen atoms can be appropriately adjusted according to their reactivity and yield, preferably in the range of about 2:8 to about 8:2 (inclusive), and more preferably in the range of about 3:7 to about 7:3 (inclusive).

Note that the sintering aid may be mixed with amorphous boron nitride instead of the starting materials, or may be mixed with both the starting materials and the amorphous boron nitride. That is, prior to the third step, the sintering aid for promoting conversion of the starting materials into boron nitride may be mixed with the starting materials and/or the amorphous boron nitride.

Examples of the sintering aid include oxides or carbonates of alkali metals such as lithium, sodium, and potassium, and oxides or carbonates of alkaline earth metals such as calcium and strontium. The content of the sintering aid is preferably about 0.9 parts by mass to about 20 parts by mass (inclusive) relative to 100 parts by weight of the starting material or the amorphous boron nitride. Note that, as for the compound used as the sintering aid, one type may be used alone, or two or more types may be used in combination.

The first firing temperature is preferably about 600°C to about 1300°C (inclusive), and more preferably about 800°C to about 1200°C (inclusive). By setting the first firing temperature to the above-mentioned lower limit or higher, conversion of the mixture into amorphous boron nitride can be promoted and the amount of unreacted starting materials (e.g., the boron-containing compound) can be reduced. On the other hand, by setting the first firing temperature to the above-mentioned upper limit or lower, a decrease in oxides such as B₂O₃, the sintering aid, and the like that contribute to the formation of boron nitride is suppressed, thereby promoting grain growth and crystallization of boron nitride.

The second firing temperature is preferably about 1500°C to about 2200°C (inclusive), more preferably about 1600°C to about 1900°C (inclusive), and still more preferably about 1700°C to about 1800°C (inclusive). By setting the second firing temperature within the above-mentioned range, excessive grain growth of the boron nitride can be suppressed while facilitating an increase in the crystallinity of the amorphous boron nitride.

Each of the first and second firing temperatures may be maintained constant or may be varied continuously or discontinuously. There is no particular limitation on the heating rate during heating or the cooling rate during cooling.

The holding time (first firing time) at the first firing temperature is preferably about 0.5 hours or more, and more preferably about 1 hour or more. By holding the first firing temperature for the above-mentioned time, the conversion into amorphous boron nitride can be promoted, thereby reducing the residual amount of the starting materials (e.g., the boron-containing compound). As a result, grain growth and crystallization of the boron nitride can also be promoted.

The holding time (second firing time) at the second firing temperature is preferably about 2 hours or more, and more preferably about 4 hours or more. By holding the second firing temperature for the above-mentioned time, it enables the firing to proceed insufficiently, thereby promoting the grain growth and crystallization of the boron nitride.

If the amorphous boron nitride obtained in the second step already has the desired degree of crystallinity and/or graphitization index, the third step may be omitted.

There are no particular limitations on the container for accommodating the mixture and the amorphous boron nitride as well as on the firing apparatus (e.g., heating apparatus).

As the container, for example, a container made of boron nitride can be used. As the heating apparatus, for example, a firing furnace using an electric heater can be used.

In the above-described method for producing boron nitride, further steps involving heating, cooling, humidification, drying, and washing operations may be included between the preparation of the mixture and the completion of firing of the mixture, within a scope that does not depart from the gist of the present invention.

Since boron nitride with enhanced crystallinity is generally obtained in the form of a blocky solid (agglomerate), it is preferable to pulverize it. That is, in one embodiment of the method for producing the ammonia-generating agent, it is preferable to include, between the third step and the fourth step, a step of pulverizing an agglomerate of the boron nitride. By such pulverization, the average particle size of the boron nitride can be adjusted.

As the pulverizer, for example, a grow mill, a jet mill, a Super Micron Mill, or the like can be used. When, for example, a jet mill is used to pulverize the boron nitride, the feed rate can be increased and the pulverization pressure can be set to an appropriately low level. By setting such conditions, the average particle size of the resulting boron nitride can be adjusted to an appropriate size.

The pulverized boron nitride may contain impurities other than boron nitride and water-soluble boron compounds (hereinafter these may be collectively referred to as "impurities and the like"). Therefore, it is preferable to remove the impurities and the like by washing with a washing liquid, followed by solid-liquid separation and drying to finally obtain boron nitride.

As the washing liquid, an aqueous solution containing an acidic substance, an organic solvent, or a mixture of an organic solvent and water may be suitably used. Examples of the acidic substance include inorganic acids such as hydrochloric acid and nitric acid. Examples of the organic solvent include water-soluble organic solvents such as methanol, ethanol, propanol, isopropanol, and acetone.

As the diluting liquid for solid-liquid separation after washing, it is preferable to use water having an electrical conductivity of about 1 mS/m or less, from the viewpoint of avoiding secondary contamination with impurities. Although the amount of the diluting liquid for solid-liquid separation is preferably as small as possible from the viewpoint of cost and wastewater treatment, if it is too small, impurities and the like may remain in the boron nitride. Accordingly, the amount of the diluting liquid relative to 1 kg of boron nitride is preferably about 300 times or less, more preferably about 250 times or less, and still more preferably about 200 times or less.

In the case of drying after solid-liquid separation following the completion of washing, the method for solid-liquid separation is not particularly limited, and for example, a decantation, a suction filter, a pressure filter, a rotary filter, a sedimentation separator, or an apparatus combining these can be used.

There are no particular limitations on the drying method for the boron nitride powder after solid-liquid separation. As the usable drying apparatus, for example, a shelf dryer, a fluidized bed dryer, a spray dryer, a rotary dryer, a belt dryer, or an apparatus combining these can be used.

The atmosphere temperature in the dryer is preferably about 30°C to about 300°C (inclusive), and more preferably about 30°C to about 200°C (inclusive).

The washing, solid-liquid separation, and drying may each be performed once, or may be performed multiple times using the same method or different methods in combination.

As described above, the ammonia-generating agent may include both boron nitride and silicon nitride. That is, the ammonia-generating agent may contain boron nitride and silicon nitride.

Here, when silicon nitride is used as the ammonia-generating agent, upon contact with water (immersion in water), the following reactions occur at and around the surface of the ammonia-generating agent:
(X) Si₃N₄ + 6H₂O → 3SiO₂ + 4NH₃
(Y) NH₃ + H₂O ↔ NH₄⁺ + OH⁻
(Z) SiO₂ + 2H₂O ↔ Si(OH)₄

When the ammonia-generating agent comes into contact with water, ammonia (NH₃) is generated according to reaction equation (X), followed by generation of ammonium ions (NH₄⁺) according to reaction equation (Y). This causes the pH of the liquid phase around the ammonia-generating agent to rise.

Additionally, silicon dioxide (SiO₂) formed by the reaction of reaction equation (X) deposits on the surface of the silicon nitride. The deposited silicon dioxide forms silicic acid (Si(OH)₄) in accordance with reaction equation (Z) and dissolves in water.

In a high pH environment, the reaction of reaction equation (Z) occurs, whereby silicon dioxide is removed from the surface of the silicon nitride, allowing the surface of the silicon nitride to be exposed to the liquid phase. As a result, the reaction of reaction equation (X) occurs again.

In this manner, by the repeated occurrence of the reaction of reaction equation (X) and the reactions of reaction equations (Y) and (Z), ammonia and ammonium ions are generated.

However, the reaction of reaction equation (Z) requires several days. Accordingly, when silicon nitride is used as the ammonia-generating agent, ammonia is generated in a short period of time; however, the amount of ammonia generated decreases due to deposition of silicon dioxide on the surface of the silicon nitride.

Thereafter, after several days have elapsed, the surface of the silicon nitride is again exposed to the liquid phase, whereby ammonia is generated in a short period of time, followed by a decrease in the amount of ammonia generated, in the same or similar manner as described above.

That is, when silicon nitride is used as the ammonia-generating agent, the concentration of ammonia in the liquid phase increases periodically.

The α-phase content of the silicon nitride is preferably about 85% or more, more preferably about 90% or more, still more preferably about 95% or more, and may be 100%. By using silicon nitride having such an α-phase content, the periodic increase in ammonia concentration in the liquid phase can be made more distinct.

Accordingly, by using both boron nitride and silicon nitride as the ammonia-generating agent, ammonia can be stably generated over a long period of time while periodically increasing the amount of ammonia generated. An ammonia-generating agent having such characteristics is suitable for applications requiring antimicrobial properties (e.g., antibacterial and antiviral properties).

In this case, the mass ratio of boron nitride to silicon nitride is preferably about 1:9 to about 9:1 (inclusive), more preferably about 3:7 to about 8:2 (inclusive), and still more preferably about 4:6 to and about 7:3 (inclusive). This makes it possible to sufficiently achieve the effect of generating ammonia stably over a long period of time while periodically increasing the amount of ammonia generated.

The ammonia-generating agent and the method for producing the same of the present invention have been described above; however, the ammonia-generating agent and the method for producing the same of the present invention are not limited to the above-described embodiments.

For example, when the ammonia-generating agent is used for applications other than as an antimicrobial agent (e.g., for recovering as large an amount of ammonia as possible), there are no particular limitations on the lower limit of the degree of crystallinity, the upper limit of the graphitization index, and the like.

Furthermore, the invention may also be provided in the respective aspects described below. (1) An ammonia-generating agent that generates ammonia upon contact with water molecules, comprising: boron nitride having a degree of crystallinity of 90% or less. (2) An ammonia-generating agent that generates ammonia upon contact with water molecules, comprising: boron nitride having a graphitization index of 1.5 or higher. (3) The ammonia-generating agent according to (1) or (2), wherein: an oxygen content in the boron nitride is 0.5 atomic% or more. (4) The ammonia-generating agent according to any one of (1) to (3), wherein: a content of the boron nitride in the ammonia-generating agent is 80 mass% or more. (5) The ammonia-generating agent according to any one of (1) to (4), wherein: the ammonia-generating agent is particulate and has a volume-average particle size of 10 µm or less. (6) The ammonia-generating agent according to any one of (1) to (5), wherein: the ammonia-generating agent has a BET specific surface area of 10 m²/g or more. (7) The ammonia-generating agent according to any one of (1) to (6), wherein: when 0.5 g of the ammonia-generating agent is immersed in 10 g of water for 30 hours, a concentration of ammonia in a liquid phase is 0.15 mmol/dm³ or more. (8) The ammonia-generating agent according to any one of (1) to (7), wherein: when 0.5 g of the ammonia-generating agent is immersed in 10 g of water for 800 minutes, a pH of a liquid phase is 8 or higher. (9) The ammonia-generating agent according to any one of (1) to (8), wherein: when 0.5 g of the ammonia-generating agent is immersed in 10 g of water for 300 minutes, a concentration of boron in a liquid phase (pH 9) is 0.01 mol/dm³ or more. (10) The ammonia-generating agent according to any one of (1) to (9), further comprising: silicon nitride. (11) The ammonia-generating agent according to (10), wherein: an α-phase content of the silicon nitride is 85% or more.

(12) The ammonia-generating agent according to any one of (1) to (11), wherein: the ammonia-generating agent is used as an antimicrobial agent. (13) A method for producing the ammonia-generating agent according to any one of (1) to (12), the method comprising: a first step of preparing a mixture containing a boron-containing compound and a nitrogen-containing compound as starting materials; a second step of firing the mixture at a first firing temperature under an inert atmosphere and/or an ammonia atmosphere to obtain amorphous boron nitride; a third step of firing the amorphous boron nitride at a second firing temperature under an inert atmosphere and/or an ammonia atmosphere to adjust crystallinity of the boron nitride; and a fourth step of performing a post-treatment on the boron nitride after the crystallinity has been adjusted. (14) The method according to (13), wherein: prior to the third step, a sintering aid for promoting conversion of the starting materials into boron nitride is mixed with the starting materials and/or the amorphous boron nitride.

(15) The method according to (13) or (14), further comprising: between the third step and the fourth step, a step of pulverizing an agglomerate of the boron nitride.

Needless to say, the present invention is not limited to the above.

Finally, although various embodiments according to the present disclosure have been described, they are presented by way of example and are not intended to limit the scope of the invention. The novel embodiments may be implemented in various other forms, and various omissions, substitutions, and changes may be made without departing from the spirit of the invention. These embodiments and their modifications are intended to be included within the scope and spirit of the invention, as well as within the scope of the invention described in the claims and their equivalents.

### [Examples]

The present invention will now be described in more detail using Examples and Comparative Example below, but the present invention is not limited to Examples below.

### 1. Production of Ammonia-Generating Agent

### (Example 1)

First, as starting materials, 200 g of boric acid powder (manufactured by Kanto Chemical Co., Inc., purity: 99.8 mass% or more) and 180 g of melamine powder (manufactured by FUJIFILM Wako Pure Chemical Corporation, purity: 99.0 mass% or more) were individually weighed, and they were mixed for 10 minutes using an alumina mortar.

The resulting powder mixture (mixed powder) was then placed in a small vibrating vacuum dryer ("VH90"; manufactured by Chuo Kakohki Co., Ltd.) and dried at a temperature of 80°C and a relative humidity of 85% RH for 6 hours.

Next, the dried powder mixture was placed in a hexagonal boron nitride container (internal volume: 1.4 L), and the container was then placed in an electric furnace ("TV-200"; manufactured by Tokai Konetsu Kogyo Co., Ltd.) having a furnace chamber volume of 16 L.

Then, while supplying nitrogen gas into the furnace chamber at a flow rate of 16 L/min (volume at 25°C), the temperature was raised from room temperature at a heating rate of 10°C/min and maintained at 1000°C (first firing temperature) for 2 hours. Thereafter, heating was stopped and the furnace was allowed to cool naturally. When the temperature in the furnace chamber decreased to 100°C or lower, the electric furnace was opened, and amorphous boron nitride (prior to pulverization) was recovered.

Next, 10 parts by mass of calcium carbonate (manufactured by FUJIFILM Wako Pure Chemical Corporation, purity: 99.5 mass% or more) as an auxiliary component was added to 100 parts by mass of the obtained amorphous boron nitride powder, mixed for 10 minutes using an alumina mortar, and then placed in the aforementioned electric furnace.

Then, while supplying nitrogen gas into the furnace chamber at a flow rate of 16 L/min (volume at 25°C), the temperature was raised at a heating rate of 10°C/min to reach 1750°C (second firing temperature), which is the maximum firing temperature, and maintained at this temperature for 4 hours. Thereafter, heating was stopped and the furnace was allowed to cool naturally. When the temperature decreased to 100°C or lower, the electric furnace was opened, and boron nitride (prior to pulverization) was recovered.

Next, the obtained boron nitride (prior to pulverization) was pulverized using a Super Micron Mill ("M52NC"; manufactured by Hosokawa Micron Corporation) to obtain boron nitride powder. In the Super Micron Mill, boron nitride was fed into the mill at a feed rate of 10 kg/h and processed at a pulverization pressure of 0.7 MPa, and the pulverized boron nitride powder was recovered from a bag filter.

Next, in order to remove impurities and the like contained in the boron nitride powder obtained by pulverization, 20 L of 67 mass% dilute nitric acid and 390 L of water were mixed with respect to 40 kg of boron nitride, and the mixture was stirred and washed at room temperature for 60 minutes.

Thereafter, solid-liquid separation was performed using a continuous pressure filtration apparatus ("RF-2.5"; manufactured by Hiroshima Metal & Machinery Co., Ltd.), and before the solid-liquid separation was fully completed, water was further added in an amount 275 times that of the boron nitride, per 1 kg of the boron nitride, to dilute the mixture. Thereafter, the solid-liquid separation was completed. The resulting powder after the solid-liquid separation was dried in the dryer at 170°C for 12 hours to obtain boron nitride powder (ammonia-generating agent) of Example 1.

### (Example 2)

A boron nitride powder (ammonia-generating agent) of Example 2 was produced in the same or similar manner as in Example 1, except that the auxiliary component added during the second firing was changed to sodium carbonate.

### (Comparative Example 1)

A boron nitride powder (ammonia-generating agent) of Comparative Example 1 was produced in the same or similar manner as in Example 1, except that the maximum value of the second firing temperature was changed to 1900°C.

### (Reference Example 1)

First, the air inside a vertical reactor was replaced with nitrogen gas, followed by the introduction of liquid ammonia and toluene. At this time, in the vertical reactor, the liquid ammonia and the toluene were separated into an upper layer and a lower layer, respectively.

Next, a toluene solution containing silicon tetrachloride at a concentration of 20 mass% to about 35 mass% (inclusive), with the balance being toluene, was slowly supplied to the stirred lower layer through a conduit attached to the vertical reactor. Upon supplying the toluene solution, a white reaction product (silicon diimide) precipitated near the interface between the upper and lower layers.

After completion of the reaction, the reaction solution in the vertical reactor was transferred to a filtration tank to separate the product. The filtered product was washed with liquid ammonia to purify the silicon diimide.

Next, the silicon diimide was heated to about 1500°C in a nitrogen atmosphere to decompose it, thereby obtaining silicon nitride powder. This was used as the silicon nitride powder (ammonia-generating agent) of Reference Example 1.

### (Reference Example 2)

First, elemental silicon powder having a volume-average particle size of 5 µm and silicon nitride powder having a volume-average particle size of 0.1 µm were weighed so as to have a molar ratio of 2:0.4. These powders were mixed in methanol for 12 hours using silicon nitride balls and a polyethylene container to obtain a slurry.

Next, the obtained slurry was separated by filtration and then vacuum-dried at 100°C to obtain a premixed powder. About 10 g of the premixed powder was filled into a porous refractory container, and combustion synthesis was performed in a nitrogen atmosphere at 10 MPa using the high-pressure vessel of an HIP apparatus.

Ignition of the filled powder was performed by strongly heating, for several seconds, a Ti pellet having a diameter of 20 mm placed on top of the powder with a ribbon-shaped carbon heater, thereby utilizing the heat generated by self-combustion during nitridation of Ti. The product obtained by the combustion was considerably agglomerated due to the high temperatures during the combustion synthesis. Additionally, the particles themselves contained in the product had undergone grain growth.

Next, about 100 g of the product was wet-pulverized in methanol for 72 hours using silicon nitride balls and a polyethylene container to obtain a slurry. The slurry was separated by filtration and then the obtained solid content was vacuum-dried at 100°C to obtain silicon nitride powder.

Furthermore, this silicon nitride powder was pulverized using a planetary ball mill ("PM100"; manufactured by Retsch GmbH). The pulverization time was 60 minutes. The pulverized silicon nitride powder was used as the silicon nitride powder (ammonia-generating agent) of Reference Example 2.

### 2. Measurement and Evaluation

### 2-1. Measurement of Contents of Boron Nitride and Silicon Nitride in Ammonia-Generating Agent

The contents of boron nitride and silicon nitride in the ammonia-generating agent were measured using a gas displacement method ("AccuPyc II 1340, a fully automated gas pycnometer"; manufactured by Micromeritics Instrument Corporation).

The true density of boron nitride is 2.26 g/cm³, and the true density of silicon nitride is 3.17 g/cm³. Accordingly, the true density of the ammonia-generating agent composed of a combination of these is in the range of 2.26 g/cm³ to 3.17 g/cm³ (inclusive), and the ratio can be calculated based on the value of the true density.

Moreover, whether the ammonia-generating agent contains components other than boron nitride and silicon nitride can be determined by analyzing an X-ray diffraction pattern to identify the presence of a third or more components.

The measurement results are indicated in Table 1.

### 2-2. Measurement of α-Phase Content of Silicon Nitride

The α-phase content of silicon nitride was measured using the following procedure.

X-ray diffraction of silicon nitride was performed using CuKα radiation with an X-ray diffractometer ("Ultima IV"; manufactured by Rigaku Corporation). The α-phase was represented by the diffraction line intensity Iₐ₁₀₂ for the (102) plane and the diffraction line intensity Iₐ₂₁₀ for the (210) plane, and the β-phase was represented by the diffraction line intensity I_{b101} for the (101) plane and the diffraction line intensity I_{b210} for the (210) plane. Using these diffraction line intensities, the α-phase content was calculated using the following equation: $\begin{matrix}α - phase content \left(%\right) = \\ \left({I}_{a 102}+{I}_{a 210}\right) / \left({I}_{a 102}+{I}_{a 210}+{I}_{b 101}+{I}_{b 210}\right) \times 100\end{matrix}$

The measurement results are indicated in Table 1.

### 2-3. Measurement of Degree of Crystallinity

The crystallinity of the ammonia-generating agent (boron nitride powder) obtained in each Example and Comparative Example was calculated based on the measurement results obtained by wide-angle X-ray scattering (WAXS).

Specifically, the ammonia-generating agent obtained in each Example and Comparative Example was measured using a wide-angle X-ray scattering apparatus ("Ultima-IV"; manufactured by Rigaku Corporation). Then, a one-dimensional profile (diffraction data) was created from the obtained measurement results using data analysis software, and the degree of crystallinity (%) was calculated from the diffraction data based on the following equation: 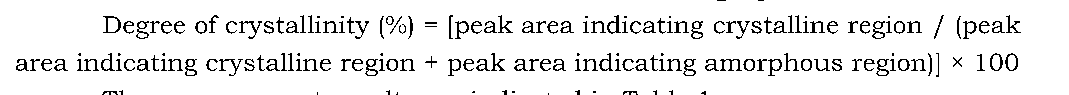 Degree of crystallinity (%) = [peak area indicating crystalline region / (peak area indicating crystalline region + peak area indicating amorphous region)] × 100

The measurement results are indicated in Table 1.

### 2-4. Measurement of Graphitization Index

The graphitization index of the ammonia-generating agent (boron nitride powder) obtained in each Example and Comparative Example was calculated based on the measurement results obtained by powder X-ray diffraction (PXRD). In the obtained X-ray diffraction spectrum, the integrated intensity of each diffraction peak (i.e., each diffraction peak) corresponding to the (100), (101), and (102) planes of the primary particles of the boron nitride, that is, the area value (in arbitrary units) enclosed by each diffraction peak and its baseline, was calculated and denoted as S100, S101, and S102, respectively. Using these calculated area values, the graphitization index was calculated based on the following equation: $G . I . = \left(S100+S101\right) / S 102$

The measurement results are indicated in Table 1.

2-5. Measurement of Oxygen Content First, 0.01 g of the ammonia-generating agent obtained in each Example, Comparative Example, and Reference Example and 0.01 g of carbon powder were set in an oxygen/nitrogen analyzer ("EMGA-920"; manufactured by HORIBA, Ltd.).

Next, the temperature was raised from 20°C to 2400°C at a heating rate of 8°C/s in a helium gas atmosphere. Oxygen and nitrogen generated during the heating were detected. From the peak areas derived from desorption of surface oxygen and internal oxygen, respectively, the amounts of surface oxygen and internal oxygen were determined, and the oxygen content was calculated based on the sum of these values.

The measurement results are indicated in Table 1.

2-6. BET Specific Surface Area The BET specific surface area of the ammonia-generating agent obtained in each Example, Comparative Example, and Reference Example was measured.

The BET specific surface area was measured by a BET single-point method using nitrogen gas based on JIS Z 8830:2013 "Determination of the specific surface area of powders (solids) by gas adsorption-BET method".

The measurement results are indicated in Table 1.

### 2-7. Particle Size Distribution

The particle size distribution of the ammonia-generating agent obtained in each Example, Comparative Example, and Reference Example was measured by laser diffraction/scattering.

The measurement was performed in accordance with the method described in JIS Z 8825:2013 "Particle size analysis-Laser diffraction methods". In the particle size distribution (cumulative distribution) where the horizontal axis represents particle size [µm] on a logarithmic scale and the vertical axis represents frequency [volume %], the particle size at which the cumulative value from the smaller particle size side reaches 50% of the total was defined as the volume-average particle size (D₅₀).

The measurement results are indicated in Table 1.

### 2-8. Measurement of Ammonia Concentration in Liquid Phase

In a vial having a capacity of 50 mL, 10 g of distilled water was placed. Into the vial, 0.5 g of the ammonia-generating agent obtained in each Example, Comparative Example, and Reference Example was added and stirred for 30 seconds to obtain a dispersion. Thereafter, the vial was capped, and the dispersion was allowed to stand at room temperature (20°C).

After a predetermined period of time, the liquid phase was sampled, and the concentration of ammonia in the liquid phase was quantified using ion chromatograph ("ICS-2100"; manufactured by Thermo Fisher Scientific Inc.).

The measurement results are indicated in Table 2.

### 2-9. Measurement of pH of Liquid Phase

In a vial having a capacity of 50 mL, 10 g of distilled water was placed. Into the vial, 0.5 g of the ammonia-generating agent obtained in each Example, Comparative Example, and Reference Example was added and stirred for 30 seconds to obtain a dispersion. Thereafter, the vial was capped, and the dispersion was allowed to stand at room temperature (20°C).

After a predetermined period of time, the pH of the liquid phase was measured using a pH meter ("FP20-Std-Kit"; manufactured by Mettler-Toledo International Inc.).

The measurement results are indicated in Table 3.

### 2-10. Measurement of Boron or Silicon Concentration in Liquid Phase

In a vial having a capacity of 50 mL, 10 g of distilled water was placed. Into this vial, 0.5 g of the ammonia-generating agent obtained in each Example and Comparative Example was added and stirred for 30 seconds to obtain a dispersion. Thereafter, the vial was capped, and the dispersion was allowed to stand at room temperature (20°C) for 300 minutes. After being allowed to stand for 300 minutes, the concentration of boron in the liquid phase at pH 9 was quantified using an ICP-MS instrument ("Agilent 8800"; manufactured by Agilent Technologies, Inc.). For the ammonia-generating agent obtained in each Reference Example, the dispersion was allowed to stand at room temperature (20°C) for 3 weeks, after which the concentration of silicon in the liquid phase at pH 9 was quantified in the same or similar manner.

The measurement results are indicated in Table 1.

### 2-11. Evaluation of Antimicrobial Properties

Staphylococcus aureus was pre-cultured in BHI liquid medium to prepare a bacterial suspension (1×10⁵ CFU/mL to 1×10⁶ CFU/mL (inclusive)). Into a microtube, 0.15 g of the ammonia-generating agent obtained in each Reference Example and 1 mL of distilled water were added to obtain a 15 w/v% dispersion.

After sterilization with ultraviolet light, 1 mL of the above-mentioned bacterial suspension was added to the microtube. Thereafter, the mixture was rotated using a tube rotator for 5 minutes at room temperature (about 20°C), after which the supernatant was collected, and the bacterial viability was measured by a WST-8 assay (absorbance at 450 nm).

Similarly, when Staphylococcus epidermidis or Escherichia coli was used as the bacterium, the viability was measured in the same or similar manner. The evaluation results are indicated in Table 4. In Table 4, the viability obtained when no ammonia-generating agent was used is indicated in the "ref." column.

**[Table 1]**

| | Example 1 | Example 2 | Comparative Example 1 | Reference Example 1 | Reference Example 2 |
|---|---|---|---|---|---|
| BN or Si₃N₄ content [%] | 98 | 98 | 99 | 98 | 98 |
| α-phase content [%] | - | - | - | 95.2 | 0.0 |
| Degree of crystallinity [%] | 85 | 86 | 100 | - | - |
| Graphitization index | 4.0 | 2.0 | 0.9 | - | - |
| Oxygen content [at%] | 0.9 | 1.2 | 0.3 | 1.2 | 1.2 |
| BET specific surface area [m²/g] | 25 | 30 | 2 | 11 | 5 |
| Volume-based average particle size of primary particles [µm] | 4 | 4 | 18 | 0.84 | 1.10 |
| Boron or silicon concentration [mol/dm³] | 0.082 | 0.096 | 0.009 | 0.015 | 0.010 |

**[Table 2]**

| Ammonia concentration in liquid phase [mmol/dm³] | Example 1 | Example 2 | Comparative Example 1 | Reference Example 1 | Reference Example 2 |
|---|---|---|---|---|---|
| After 0 hours | 0.16 | 0.58 | 0.00 | 0.038 | 0.060 |
| After 7 hours | 0.22 | 0.89 | 0.00 | 0.01 | 0.01 |
| After 14 hours | 0.21 | 0.92 | 0.00 | 0.00 | 0.00 |
| After 30 hours | 0.24 | 0.90 | 0.00 | 0.00 | 0.00 |

**[Table 3]**

| pH of liquid phase | Example 1 | Example 2 | Comparative Example 1 | Reference Example 1 | Reference Example 2 |
|---|---|---|---|---|---|
| After 0 minutes | 8.8 | 9.0 | 6.8 | 8.5 | 9.0 |
| After 200 minutes | 8.9 | 9.2 | 7.1 | 8.2 | 8.3 |
| After 400 minutes | 8.9 | 9.1 | 7.2 | 7.9 | 7.9 |
| After 600 minutes | 8.9 | 9.0 | 7.3 | 7.7 | 7.9 |
| After 800 minutes | 8.9 | 9.0 | 7.4 | 7.5 | 7.4 |

**[Table 4]**

| Antimicrobial properties | ref. | Example 1 | Example 2 | Comparative Example 1 | Reference Example 1 | Reference Example 2 |
|---|---|---|---|---|---|---|
| *Staphylococcus aureus* | 0.72 | 0.01 | 0.01 | 0.55 | 0.05 | 0.02 |
| *Staphylococcus epidermidis* | 2.00 | 0.01 | 0.01 | 1.28 | 0.05 | 0.48 |
| *Escherichia coli* | 0.50 | 0.09 | 0.01 | 0.42 | 0.17 | 0.24 |

As indicated in Table 4, the ammonia-generating agent obtained in each Example and Reference Example exhibited excellent antimicrobial properties.

As indicated in Table 2, after 0 hours, the ammonia-generating agent obtained in each Example, which released a significantly larger amount of ammonia into the liquid phase than that obtained in each Reference Example, exhibited sufficiently high antimicrobial properties (see Table 4).

In particular, the ammonia-generating agent obtained in each Example released ammonia into the liquid phase over a long period of time (see Table 2), thereby maintaining excellent antimicrobial properties (see Table 4).

Furthermore, the ammonia-generating agents obtained in Reference Examples 1 and 2 both exhibited a tendency for the ammonia concentration in the liquid phase to rise again after approximately 48 hours. Accordingly, it is considered that, by using these agents in combination with those from each Example at a predetermined mass ratio, ammonia can be stably generated over a long period, while periodically increasing the amount of ammonia generated.

## Claims

1. An ammonia-generating agent that generates ammonia upon contact with water molecules, comprising:
boron nitride having a degree of crystallinity of 90% or less.

2. An ammonia-generating agent that generates ammonia upon contact with water molecules, comprising:
boron nitride having a graphitization index of 1.5 or higher.

3. The ammonia-generating agent according to Claim 1 or Claim 2, wherein:
an oxygen content in the boron nitride is 0.5 atomic% or more.

4. The ammonia-generating agent according to any one of Claims 1 to 3, wherein:
a content of the boron nitride in the ammonia-generating agent is 80 mass% or more.

5. The ammonia-generating agent according to any one of Claims 1 to 4, wherein:
the ammonia-generating agent is particulate and has a volume-average particle size of 10 µm or less.

6. The ammonia-generating agent according to any one of Claims 1 to 5, wherein:
the ammonia-generating agent has a BET specific surface area of 10 m²/g or more.

7. The ammonia-generating agent according to any one of Claims 1 to 6, wherein:
when 0.5 g of the ammonia-generating agent is immersed in 10 g of water for 30 hours, a concentration of ammonia in a liquid phase is 0.15 mmol/dm³ or more.

8. The ammonia-generating agent according to any one of Claims 1 to 7, wherein:
when 0.5 g of the ammonia-generating agent is immersed in 10 g of water for 800 minutes, a pH of a liquid phase is 8 or higher.

9. The ammonia-generating agent according to any one of Claims 1 to 8, wherein:
when 0.5 g of the ammonia-generating agent is immersed in 10 g of water for 300 minutes, a concentration of boron in a liquid phase (pH 9) is 0.01 mol/dm³ or more.

10. The ammonia-generating agent according to any one of Claims 1 to 9, further comprising:
silicon nitride.

11. The ammonia-generating agent according to Claim 10, wherein:
an α-phase content of the silicon nitride is 85% or more.

12. The ammonia-generating agent according to any one of Claims 1 to 11, wherein:
the ammonia-generating agent is used as an antimicrobial agent.

13. A method for producing the ammonia-generating agent according to any one of Claims 1 to 12, the method comprising:
a first step of preparing a mixture containing a boron-containing compound and a nitrogen-containing compound as starting materials;
a second step of firing the mixture at a first firing temperature under an inert atmosphere and/or an ammonia atmosphere to obtain amorphous boron nitride;
a third step of firing the amorphous boron nitride at a second firing temperature under an inert atmosphere and/or an ammonia atmosphere to adjust crystallinity of the boron nitride; and
a fourth step of performing a post-treatment on the boron nitride after the crystallinity has been adjusted.

14. The method according to Claim 13, wherein:
prior to the third step, a sintering aid for promoting conversion of the starting materials into boron nitride is mixed with the starting materials and/or the amorphous boron nitride.

15. The method according to Claim 13 or Claim 14, further comprising:
between the third step and the fourth step, a step of pulverizing an agglomerate of the boron nitride.
